# EUROPEAN PATENT SPECIFICATION

(11) **EP 4 181 275 B1**
(45) Date of publication and mention of the grant of the patent: **10.09.2025**
(21) Application number: 21880401.1
(22) Date of filing: 07.10.2021
(51) Int. Cl.: H01M 10/613, H01M 10/647, H01M 10/653, H01M 10/655, H01M 10/6551, H01M 50/20, H01M 50/211, H01M 50/271

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 15.10.2020 KR 20200133533
(43) Date of publication of application: 17.05.2023
(73) Proprietor: LG Energy Solution, Ltd., Seoul 07335 (KR)
(72) Inventor: PARK, Subin, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2021/013769
(87) International publication number: WO 2022/080754

(56) References cited:
- EP-A1- 3 716 393
- WO-A1-2020/166182
- WO-A1-2020/188949
- CN-A- 111 293 252
- CN-U- 210 956 799
- KR-A- 20200 012 547
- KR-A- 20200 102 196
- US-A1- 2018 358 592
- US-A1- 2019 131 674

## Description

### [TECHNICAL FIELD]

### Cross Citation with Related Application(s)

This application claims the benefit of Korean Patent Application No. 10-2020-0133533 filed on October 15, 2020 with the Korean Intellectual Property Office.

The present disclosure relates to a battery module and a battery pack including the same, and more particularly, to a battery module having improved cooling performance and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, a lithium secondary battery, and the like. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate each coated with the positive electrode active material and the negative electrode active material are disposed with a separator being interposed between them, and a battery case that seals and houses the electrode assembly together with an electrolyte solution.

Generally, the lithium secondary battery may be classified based on the shape of the exterior material into a can type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a cell stack, thereby improving capacity and output. In addition, one or more battery modules may be mounted together with various control and protection systems such as BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and can be subjected to high-temperature conditions such as summer or desert areas.

Therefore, when a battery module or a battery pack is configured, it may be very important to stably and effectively ensure the cooling performance.

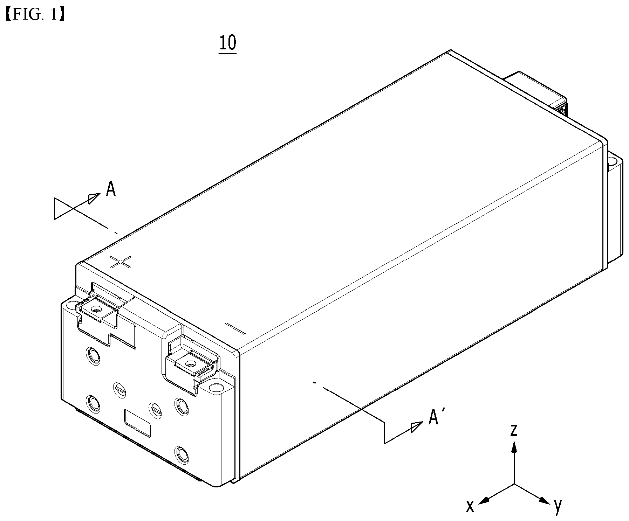

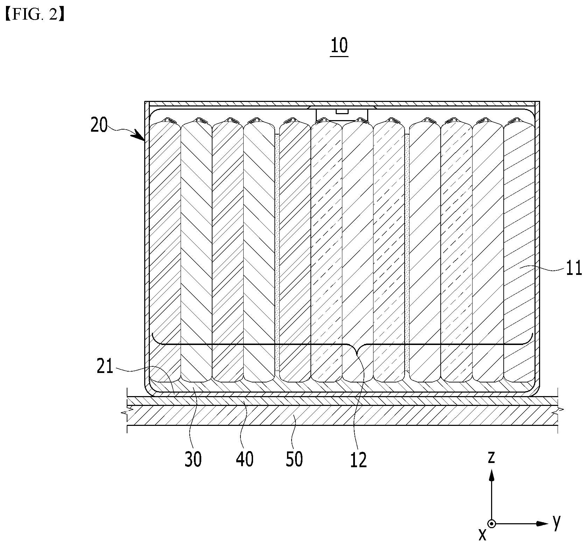

Fig. 1 is a perspective view of a conventional battery module, and Fig. 2 is a cross-sectional view taken along the cutting line A-A' of Fig. 1. Particularly, Fig. 2 further illustrates a heat transfer member and a heat sink located under the battery module.

Referring to Figs. 1 and 2, a conventional battery module 10 can be manufactured by stacking a plurality of battery cells 11 to form a battery cell stack 12 and housing the battery cell stack 12 in a module frame 20.

As described above, since the battery module 10 includes a plurality of battery cells 11, it generates a large amount of heat in a charge and discharge process. As a cooling means, the battery module 10 may include a thermal conductive resin layer 30 that is located between the battery cell stack 12 and the bottom part 21 of the module frame 20. In addition, when the battery module 10 is mounted on the pack frame to form a battery pack, a heat transfer member 40 and a heat sink 50 may be sequentially located under the battery module 10. The heat transfer member 40 may be a heat dissipation pad. The heat sink 50 may have a refrigerant flow path formed therein.

The heat generated from the battery cell 11 is transmitted to the outside through the thermal conductive resin layer 30, the bottom part 21 of the module frame 20, the heat transfer member 40, and the heat sink 50 in this order.

By the way, in the case of the conventional battery module 10, the heat transfer path is complicated as described above and thus, it is difficult to effectively transfer the heat generated from the battery cell 11. Further, the module frame 20 itself may deteriorate heat transfer properties. Further, a fine air layer such as an air gap, which can be formed in the space between the module frame 20, the heat transfer member 40, and the heat sink 50 may also be a factor that deteriorates the heat transfer properties.

As for the battery module, since other demands such as an increase in capacity are also continuing, it may be practically necessary to develop a battery module capable of satisfying these various requirements while improving the cooling performance.

WO 2020/188949 A1 describes a battery module wherein heat dissipation is achieved in a downward direction via a heat conductive layer and a cooling plate. The battery module includes a stacked plurality of batteries and a frame. The battery module further comprises a thermoplastic duct plate located between an upper surface of the battery stack and a cover plate of the frame.

WO 2020/166182 A1 describes a structurally similar battery module.

US 2018/0358592 A1 describes a battery module wherein heat dissipation is achieved in a downward direction via a thin thermally conductive resin layer and a thermally conductive bottom plate.

EP 3716393 A1 describes a battery module wherein heat dissipation is achieved in both upward and downward directions.

### [DETAILED DESCRIPTION OF THE INVENTION]

### [Technical Problem]

It is an object of the present disclosure to provide a battery module having improved cooling performance by simplifying the heat transfer path, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked; a module frame that wraps the battery cell stack and has an open part formed on the lower side; and an upper thermal conductive resin layer located between the upper surface of the battery cell stack and the module frame, wherein the battery cell stack is exposed in the downward direction through the open part.

The thermal conductive resin layer may include a first upper thermal conductive resin layer and a second upper thermal conductive resin layer that are spaced apart from each other.

The battery cells may include electrode leads that are protruded in mutually opposite directions, and the first upper thermal conductive resin layer and the second upper thermal conductive resin layer may be located apart from each other along a direction in which the electrode leads protrude from the upper surface of the battery cell stack.

The module frame may include a ceiling part for covering the upper surface of the battery cell stack, and first and second side surface parts each covering both side surfaces of the battery cell stack.

The module frame may include a first extension part extending in parallel to the lower surface of the battery cell stack from one end of the first side surface part, and a second extension part extending in parallel to the lower surface of the battery cell stack from one end of the second side surface part.

The open part may be formed between the first extension part and the second extension part.

The ceiling part, the first and second side surface parts, and the first and second extension parts may be integrally formed.

According to another embodiment of the present disclosure, there is provided a battery pack comprising: the battery module; a pack frame for housing the battery module; and a lower thermal conductive resin layer located between the battery module and the bottom part of the pack frame.

The battery cell stack may be in contact with the lower thermal conductive resin layer through the open part.

The thermal conductive resin layer may include a first lower thermal conductive resin layer and a second lower thermal conductive resin layer that are spaced apart from each other.

The battery cells may include electrode leads that are protruded in mutually opposite directions. The first lower thermal conductive resin layer and the second lower thermal conductive resin layer may be located apart from each other along a direction in which the electrode leads protrude from the lower surface of the battery cell stack.

### [Advantageous Effects]

According to embodiments of the present disclosure, an open part can be provided on the lower side of the module frame, thereby simplifying the heat transfer path and improving the cooling performance of the battery module and the battery pack including the same. Further, by eliminating unnecessary cooling structures, the cost can be reduced and the space utilization can be increased, thus increasing the capacity or output of the battery module.

In addition, a thermal conductive resin layer can be formed in a portion of the battery cell where heat generation is excessive, thereby the cooling performance is improved and at the same time, the temperature deviation between the battery cells can be minimized.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional battery module;
Fig. 2 is a cross-sectional view taken along the cutting line A-A' of Fig. 1;
Fig. 3 is a perspective view of a battery module according to an embodiment of the present disclosure;
Fig. 4 is an exploded perspective view of the battery module of Fig. 3;
Fig. 5 is a perspective view of a battery cell included in the battery module of Fig. 4;
Fig. 6 is a perspective view of a module frame included in the battery module of Fig. 4;
Fig. 7 is a cross-sectional view taken along the cutting line B-B' of Fig. 3;
Fig. 8 is a perspective view of a pack frame according to an embodiment of the present disclosure; and
Fig. 9 is a perspective view of a battery pack according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

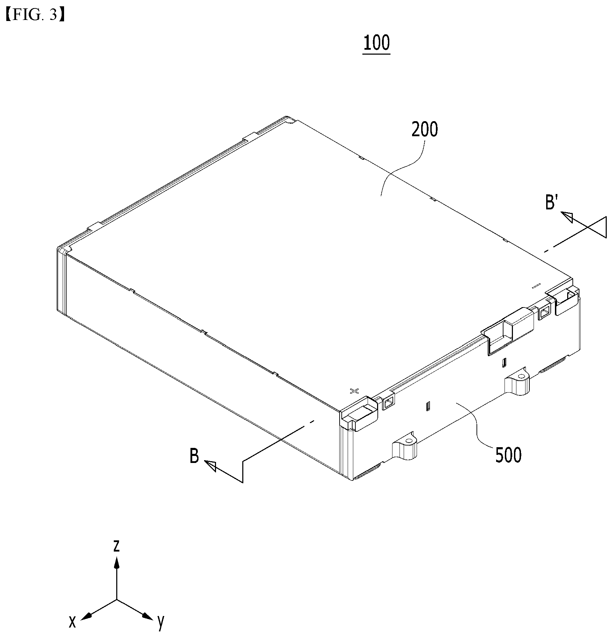

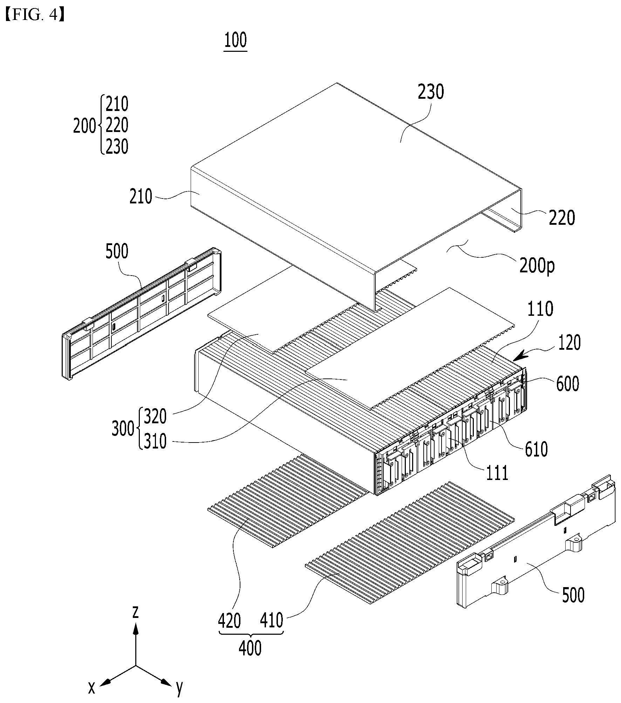

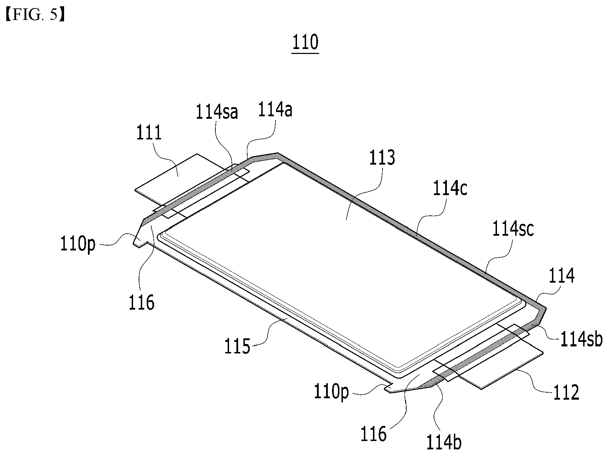

Fig. 3 is a perspective view of a battery module according to an embodiment of the present disclosure. Fig. 4 is an exploded perspective view of the battery module of Fig. 3. Fig. 5 is a perspective view of a battery cell included in the battery module of Fig. 4.

Referring to Figs. 3 to 5, a battery module 100 according to an embodiment of the present disclosure includes a battery cell stack 120 in which a plurality of battery cells 110 are stacked, a module frame 200 that wraps the battery cell stack 120 and has an open part 200p formed on the lower side, and an upper thermal conductive resin layer 300 located between the upper surface of the battery cell stack 120 and the module frame 200. The battery cell stack 120 is exposed in the downward direction (-z-axis direction) through the open part 200p.

First, the battery cell 110 is preferably a pouch type battery cell, and may be formed in a rectangular sheet-like structure. For example, the battery cell 110 according to the present embodiment has a structure in which two electrode leads 111 and 112 face each other and protrude from one end 114a and the other end 114b of a cell body 113, respectively. More specifically, the electrode leads 111 and 112 are connected to an electrode assembly (not shown) and protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be composed of a connection part 115. The cell case 114 may be composed of a laminate sheet including a resin layer and a metal layer.

In addition, the connection part 115 may extend long along one edge of the battery cell 110, and a bat-ear 110p may be formed at an end part of the connection part 115. Further, while the cell case 114 is sealed with the protruding electrode leads 111 and 112 being interposed therebetween, a terrace part 116 may be formed between the electrode leads 111 and 112 and the cell body 113. That is, the battery cell 110 includes a terrace part 116 formed to extend from the cell case 114 in a protruding direction of the electrode leads 111 and 112.

The battery cell 110 may be composed by a plurality of numbers, and the plurality of battery cells 110 may be stacked so as to be electrically connected to each other, thereby forming a battery cell stack 120. Particularly, as shown in Fig. 4, a plurality of battery cells 110 may be stacked along a direction parallel to the x-axis. Although not specifically shown in the figure, an adhesive member may be located between the battery cells 110. Thereby, the battery cells 110 may be adhered to each other to form the battery cell stack 120.

The battery cell stack 120 according to the present embodiment may be a large-area module in which the number of battery cells 110 become larger than that of the conventional case. Specifically, 32 to 48 battery cells 110 can be included per battery module 100. In the case of such a large-area module, the horizontal length of the battery module becomes long. Here, the horizontal length may mean a length in the direction in which the battery cells 110 are stacked, that is, in a direction parallel to the x-axis.

On the other hand, when charge and discharge of the battery cell are repeatedly performed, a lot of heat is generated in portions adjacent to the electrode leads 111 and 112. That is, more heat is generated during charge and discharge as approaching the terrace part116 rather than the central part of the cell body 113.

In this case, as described above, the battery module according to the present disclosure includes an upper thermal conductive resin layer 300 located between the upper surface of the battery cell stack 120 and the module frame 200.

The upper thermal conductive resin layer 300 may include a first upper thermal conductive resin layer 310 and a second upper thermal conductive resin layer 320 that are spaced apart from each other. Specifically, the battery cells 110 may include electrode leads 111 and 112 that are protruded in mutually opposite directions, and the first upper thermal conductive resin layer 310 and the second upper thermal conductive resin layer 320 may be located apart from each other along a direction in which the electrode leads 111 and 112 protrude from the upper surface of the battery cell stack 120. That is, as shown in Fig. 4, the first upper thermal conductive resin layer 310 and the second upper thermal conductive resin layer 320 may be located apart from each other along a direction parallel to the y-axis. More specifically, the first upper thermal conductive resin layer 310 and the second upper thermal conductive resin layer 320 may be respectively located at both ends of the upper surface of the battery cell stack 120 in the direction in which the electrode leads 111 and 112 protrude.

Looking at one battery cell 110 as a reference, the first upper thermal conductive resin layer 310 and the second upper thermal conductive resin layer 320 according to the present embodiment may be respectively located at portions adjacent to the terrace parts 116 from which the electrode leads 111 and 112 protrude in the one side part 114c of the battery cell 110. The upper thermal conductive resin layer 300 can be formed in a portion of the battery cell 110 where heat generation is excessive, thereby improving heat dissipation and cooling performance.

The thermal conductive resin layer 300 may include a thermal conductive resin. The thermal conductive resin may include a thermal conductive adhesive material, and specifically, it may include at least one of a silicone material, a urethane material, and an acrylic material. The thermal conductive resin is a liquid during application but is cured after application, so that it can perform the role of fixing one battery cell 110 constituting the battery cell stack 120. Further, since the thermal conductive resin has excellent heat transfer properties, heat generated from the battery cell 110 can be quickly transferred to the outside of the battery module 100, thereby preventing overheating of the battery module. A part of heat generated from the battery cell stack 120 may be discharged to the outside via the upper thermal conductive resin layer 300 and the module frame 200.

Each of the first upper thermal conductive resin layer 310 and the second upper thermal conductive resin layer 320 can extend in a stacking direction of the battery cell 110. That is, with respect to the battery cells 110 stacked in a certain direction, the first upper thermal conductive resin layer 310 and the second upper thermal conductive resin layer 320 may be in contact with portions adjacent to the terrace parts 116 among the one side parts 114c of all of the battery cells 110.

In a comparative example of the present disclosure, an upper thermal conductive resin layer may be formed on the entirety of the upper surface of the battery cell stack 120. In this case, the thermal conductive resin layer is formed on the entirety of the one side part 114c of the battery cell 110, and the upper thermal conductive resin layer uniformly distributed with respect to the battery cell 110 having a large difference in the degree of heat generation for each portion is difficult to eliminate a temperature deviation between the portions of the battery cells 110. Unlike the same, since the battery module 100 according to the present embodiment includes the first upper thermal conductive resin layer 310 and the second upper thermal conductive resin layer 320, heat dissipation can be effectively performed at both end parts of the battery cell 110 where heat generation is excessive, and the temperature deviation between the respective portions of the battery cell 110 can be minimized.

Since the temperature deviation between the respective portions of the battery cell 110 ultimately causes a decrease in the performance of the battery module, the first upper thermal conductive resin layer 310 and the second upper thermal conductive resin layer 320 according to the present embodiment may contribute to improving the uniform performance and lifespan of the battery module.

Next, the module frame 200 according to the present embodiment will be described in detail with reference to Figs. 4, 6 and 7.

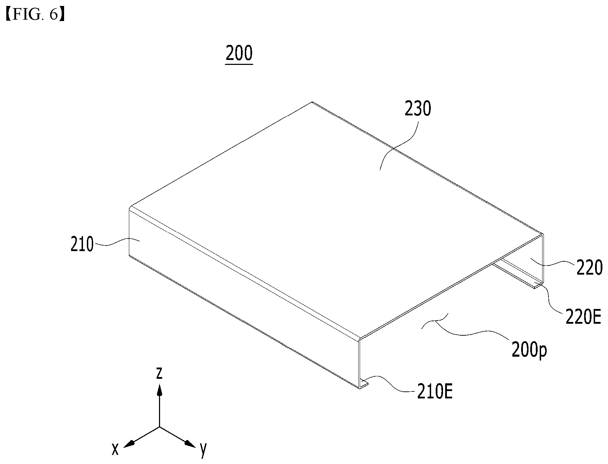

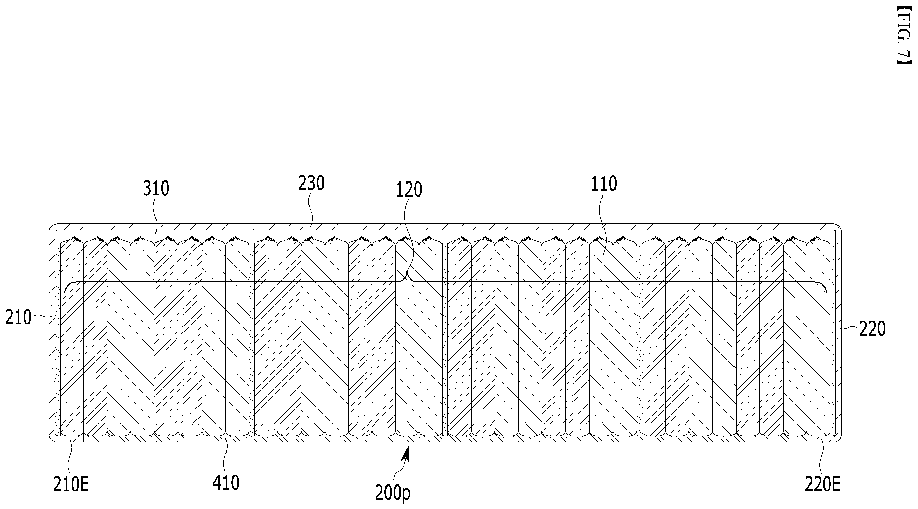

Fig. 6 is a perspective view of a module frame included in the battery module of Fig. 4. Fig. 7 is a cross-sectional view taken along the cutting line B-B' of Fig. 3.

Referring to Figs. 4, 6 and 7, the module frame 200 according to the present embodiment has the open part 200p formed on the lower side and thus, the battery cell stack 120 is exposed in the downward direction through the open part 200p. Specifically, the module frame 200 may include a ceiling part 230 for covering the upper surface of the battery cell stack 120 and first and second side surface parts 210 and 220 each covering both side surfaces of the battery cell stack 120. The above-mentioned upper thermal conductive resin layer 300 may be located between the upper surface of the battery cell stack 120 and the ceiling part 230 of the module frame 200. The first and second side surface parts 210 and 220 may be formed to extend downward from both ends of the ceiling part 230, respectively.

Meanwhile, the module frame 200 may include a first extension part 210E extending in parallel to the lower surface of the battery cell stack 120 from one end of the first side surface part 210, and a second extension part 220E extending in parallel to the lower surface of the battery cell stack 120 from one end of the second side surface part 220. The first extension part 210E and the second extension part 220E may be extended in mutually opposite directions. The open part 200p of the module frame 200 may be formed between the first extension part 210E and the second extension part 220E.

As described above, an adhesive member (not shown) is located between the battery cells 110 constituting the battery cell stack 120 so that the battery cells 110 can be adhered and fixed to each other. At this time, the first extension part 210E and the second extension part 220E are provided in the module frame 200, and therefore, it possible to prevent the battery cell stack 120 from being separated through the open part 200p formed on the lower side of the module frame 200.

Meanwhile, the ceiling part 230, the first and second side surface parts 210 and 220, and the first and second extension parts 210E and 210E may be integrally formed. That is, by bending one metal plate member several times, it is possible to manufacture the module frame 200 including the ceiling part 230, the first and second side surface parts 210 and 220, and the first and second extension parts 210E and 220E.

Meanwhile, the battery module 100 according to the present embodiment may include an end plate 500. The end plate 500 may be located on the front surface (y-axis direction) and the rear surface (-y-axis direction) of the battery cell stack 120, so that it may be formed so as to cover the battery cell stack 120. Such end plate 500 can physically protect the battery cell stack 120 and other electrical components from external impacts. An open part for exposing the LV connector or the terminal busbar to the outside may be formed in the end plate 500, whereby the external connection of the LV connector and the terminal busbar can be guided to form the LV (low voltage) connection and the HV (High voltage) connection of the battery module 100.

The module frame 200 and the end plate 500 can physically protect the battery cell stack 120 from external impacts or vibrations. For this purpose, the module frame 200 and the end plate 500 may include a metal material having a predetermined strength. The module frame 200 and the end plate 500 are coupled by welding or the like in a state where the corresponding corner parts are in contact with each other, so that the battery cell stack 120 can be housed therein.

Meanwhile, a busbar frame 600 on which the busbar 610 is mounted may be located between the battery cell stack 120 and the end plate 500. The electrode leads 111 and 112 of the battery cells 110 in the front (y-axis direction) and rear (-y-axis direction) directions of the battery cell stack 120 protrude, respectively, and the electrode leads 111 and 112 may pass through a slit formed in the busbar 610 or the busbar frame 600. After that, the electrode leads 111 and 112 may be bent and joined to the busbar 610 by a method such as welding. Electrical connection between the plurality of battery cells 110 may be made in this manner. Although not specifically shown in the figure, an insulating cover for electrical insulation may be located between the busbar frame 600 and the end plate 500.

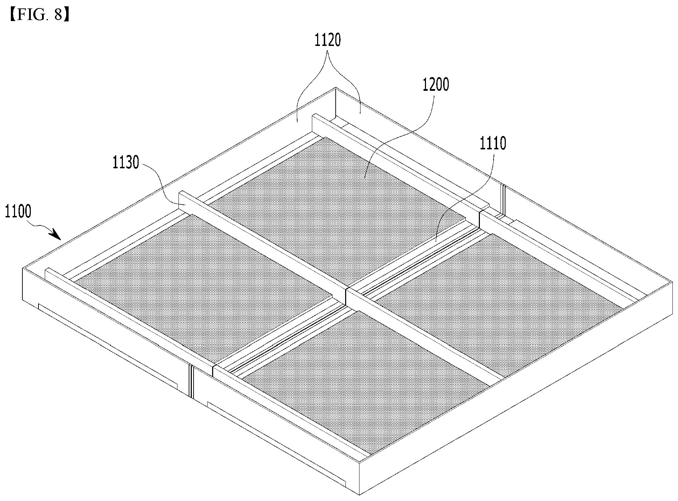

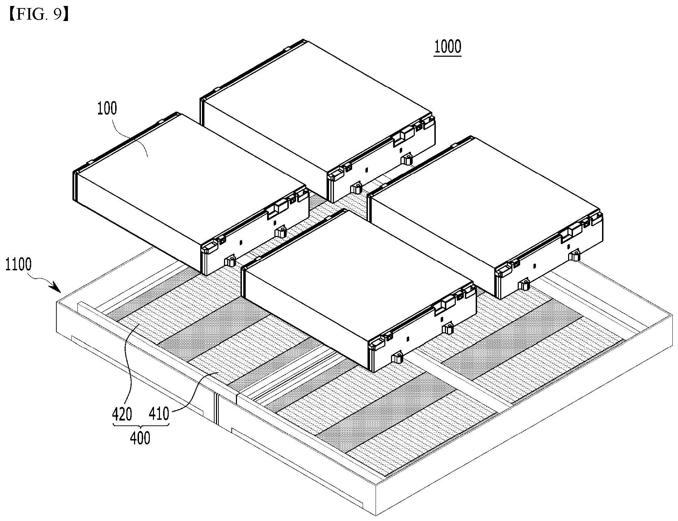

A lower thermal conductive resin layer 400 may be located under the battery module 100 according to the present embodiment. Next, the battery pack 1000 including the lower thermal conductive resin layer 400 will be described in detail with reference to Figs. 8 and 9.

Fig. 8 is a perspective view of a pack frame according to an embodiment of the present disclosure. Fig. 9 is a perspective view of a battery pack according to an embodiment of the present disclosure.

Referring to Figs. 4, 7, 8 and 9, a battery pack 1000 according to an embodiment of the present disclosure includes a battery module 100, a pack frame 1100 for housing the battery module 100, and a lower thermal conductive resin layer 400 located between the battery module 100 and the bottom part 1110 of the pack frame 1100. In Figs. 4 and 7, for convenience of explanation, only the battery module 100 and the lower thermal conductive resin layer 400 located below the battery module 100 are shown, and the illustration of the pack frame 1100 is omitted.

First, the pack frame 1100 according to the present embodiment shown in Fig. 8 may include a bottom part 1110, a side wall part 1120, and a partition wall part 1130. The side wall part 1120 may extend upward from the corners of the bottom part 1110 to form the pack frame 1100 having an open upper end. The partition wall part 1130 may be located on the bottom part 1110 to partition a space inside the pack frame 1100. The battery module 100 may be located in each space partitioned by the partition wall part 1130.

Meanwhile, the heat sink 1200 may be located on the bottom part1110. The heat sink 1200 has a refrigerant flow path formed therein and can perform a heat dissipation function with respect to the battery module 100.

The lower thermal conductive resin layer 400 according to the present embodiment may be formed by applying a thermal conductive resin onto the bottom part 1110 or the heat sink 1200 of the pack frame 1100 and then curing it. As described above, the thermal conductive resin may include a thermal conductive adhesive material, and specifically, it may include at least one of a silicone material, a urethane material, and an acrylic material.

At this time, the battery cell stack 120 included in the battery module 100 may be in contact with the lower thermal conductive resin layer 400 through the open part 200p of the module frame 200.

In the case of the conventional battery module 10 shown in Figs. 1 and 2, heat generated from the battery cell 11 is sequentially transferred to the thermal conductive resin layer 30, the bottom part 21 of the module frame 20, the heat transfer member 40, and the heat sink 50. The heat transfer path is complicated and thus, it is difficult to effectively transfer heat generated from the battery cell 11, and a fine air layer such as an air gap that may be formed between the module frame 20, the heat transfer member 40, and the heat sink 50 may interfere with heat transfer.

Unlike the same, in the battery module 100 according to the present embodiment, since the battery cell stack 120 is in contact with the lower thermal conductive resin layer 400 through the open part 200p of the module frame 200, heat generated from the battery cell 110 may be sequentially transferred to the lower thermal conductive resin layer 400 and the heat sink 1200. That is, the heat transfer path in the downward direction of the battery module 100 is simplified, and the possibility of generating an air layer such as an air cap can be significantly reduced. Therefore, the cooling performance of the battery module 100 and the battery pack 1000 including the same can be improved.

In addition, it is possible to reduce costs by eliminating unnecessary cooling structures. Further, since the number of parts in the height direction of the battery pack 1000 is reduced, the space utilization can be increased, thereby increasing the capacity or output of the battery module.

Meanwhile, the lower thermal conductive resin layer 400 may include a first lower thermal conductive resin layer 410 and a second lower thermal conductive resin layer 420 that are spaced apart from each other. Specifically, the battery cell 110 may include electrode leads 111 and 112 protruding in mutually opposite directions, and the first lower thermal conductive resin layer 410 and the second lower thermal conductive resin layer 420 are located apart from each other in the lower surface of the battery cell stack 120 along the direction in which the middle electrode leads 111 and 112 protrude. That is, as shown in Fig. 4, the first lower thermal conductive resin layer 410 and the second lower thermal conductive resin layer 420 may be located apart from each other along a direction parallel to the y-axis. More specifically, the first lower thermal conductive resin layer 410 and the second lower thermal conductive resin layer 420 may be located apart from each other in the lower surface of the battery cell stack 120 along the direction in which the electrode leads 111 and 112 protrude.

Based on one battery cell 110, the first lower thermal conductive resin layer 410 and the second lower thermal conductive resin layer 420 according to the present embodiment may be respectively located at portions adjacent to the terrace parts 116 from which the electrode leads 111 and 112 protrude in the one side part 114c of the battery cell 110. The lower thermal conductive resin layer 400 can be formed in a portion of the battery cell 110 where heat generation is excessive, thereby improving heat dissipation and cooling performance. Meanwhile, in another embodiment of the present disclosure, each of the first lower thermal conductive resin layer and the second lower thermal conductive resin layer may be formed in a region excluding a portion corresponding to a bat-ear 110p among regions adjacent to the terrace part 116.

Each of the first lower thermal conductive resin layer 410 and the second lower thermal conductive resin layer 420 may be extended along a stacking direction of the battery cell 110. That is, with respect to the battery cells 110 stacked in a predetermined direction, each of the first lower thermal conductive resin layer 410 and the second lower thermal conductive resin layer 420 may come into contact with portions adjacent to a terrace parts 116 among the connection parts 115 of all the battery cells 110.

In a comparative example for the present disclosure, a lower thermal conductive resin layer may be formed on the entire lower surface of the battery cell stack 120. In this case, the thermal conductive layer is formed on the entirety of the connection part 115 of the battery cell 110, and the lower thermal conductive resin layer uniformly distributed with respect to the battery cell 110 having a large difference in the degree of heat generation for each portion is difficult to eliminate the temperature deviation between the portions of the battery cells 110. Unlike the same, since the battery module 100 according to the present embodiment includes the first thermal conductive resin layer 410 and the second thermal conductive resin layer 420, heat dissipation can be effectively performed at both end parts of the battery cell 110 where heat generation is excessive, and the temperature deviation between the portions of one battery cell 110 can be minimized.

Since the temperature deviation between the respective portions of the battery cell 110 ultimately causes a decrease in the performance of the battery module, the lower thermal conductive resin layer 400 according to the present embodiment may contribute to improving the uniform performance and lifespan of the battery module.

That is, the upper thermal conductive resin layer 300 and the lower thermal conductive resin layer 400 according to the present embodiment include first and second upper thermal conductive resin layers 310 and 320 and first and second lower thermal conductive resin layers 410 and 420, respectively, and thus, the temperature deviation between the battery cells 110 can be minimized. As the temperature deviation is eliminated, the effect of improving the performance and extending the lifespan of the battery module 100 and the battery pack 1000 including the same can be expected.

In addition, since the upper thermal conductive resin layer 300 and the lower thermal conductive resin layer 400 are provided on the upper and lower surfaces of the battery cell stack 120, respectively, heat generated in the battery cell 110 can be discharged to the outside through various paths, so that the cooling performance is improved.

Even though the terms indicating directions such as front and rear, left, right, upper, lower directions are used herein, it is obvious to those skilled in the art that these merely represent relative positions for convenience in explanation and may vary depending on a position of an observer, a position of an object, or the like.

The one or more battery modules according to the present embodiment as described above can be mounted together with various control and protection systems such as a battery management system (BMS) and a cooling system to form a battery pack.

The battery module or the battery pack can be applied to various devices. Specifically, these devices can be applied to vehicle means such as an electric bicycle, an electric vehicle, a hybrid vehicle, but the present disclosure is not limited thereto and can be applied to various devices that can use the secondary battery.

### [Description of Reference Numerals]

100: battery module
200: module frame
200p: open part
300: upper thermal conductive resin layer
400: lower thermal conductive resin layer

## Claims

1. A battery module (100) comprising:
a battery cell stack (120) in which a plurality of battery cells (110) are stacked;
a module frame (200) that wraps the battery cell stack (120) and has an open part (200p) formed on the lower side; and
wherein the battery cell stack (120) is exposed in the downward direction through the open part (200p),
**characterized in that** an upper thermal conductive resin layer (300) is located between the upper surface of the battery cell stack (120) and the module frame (200).

2. The battery module (100) according to claim 1, wherein:
the upper thermal conductive resin layer (300) comprises a first upper thermal conductive resin layer (310) and a second upper thermal conductive resin layer (320) that are spaced apart from each other.

3. The battery module (100) according to claim 2, wherein:
the battery cells (110) comprise electrode leads (111, 112) that are protruded in mutually opposite directions, and
the first upper thermal conductive resin layer (310) and the second upper thermal conductive resin layer (320) are located apart from each other along a direction in which the electrode leads (111, 112) protrude from the upper surface of the battery cell stack (120).

4. The battery module (100) according to claim 1, wherein:
the module frame (200) comprises a ceiling part (230) for covering the upper surface of the battery cell stack (120), and first and second side surface parts (210, 220) each covering both side surfaces of the battery cell stack (120).

5. The battery module (100) according to claim 4, wherein:
the module frame (200) comprises a first extension part (210E) extending in parallel to the lower surface of the battery cell stack (120) from one end of the first side surface part (210), and a second extension part (220E) extending in parallel to the lower surface of the battery cell stack (120) from one end of the second side surface part (220).

6. The battery module (100) according to claim 5, wherein:
the open part (200p) is formed between the first extension part (210E) and the second extension part (220E).

7. The battery module (100) according to claim 5, wherein:
the ceiling part (230), the first and second side surface parts (210, 220), and the first and second extension parts (210E, 220E) are integrally formed.

8. A battery pack (1000) comprising:
the battery module (100) as set forth in claim 1;
a pack frame (1100) for housing the battery module (100); and
a lower thermal conductive resin layer (400) located between the battery module (100) and the bottom part (1110) of the pack frame (1100).

9. The battery pack (1000) according to claim 8, wherein:
the battery cell stack (120) is in contact with the lower thermal conductive resin layer (400) through the open part (200p).

10. The battery pack (1000) according to claim 8, wherein:
the lower thermal conductive resin layer (400) comprises a first lower thermal conductive resin layer (410) and a second lower thermal conductive resin layer (420) that are spaced apart from each other.

11. The battery pack (1000) according to claim 10, wherein:
the battery cells (110) comprise electrode leads (111, 112) that are protruded in mutually opposite directions, and
the first lower thermal conductive resin layer (410) and the second lower thermal conductive resin layer (420) are located apart from each other along a direction in which the electrode leads (111, 112) protrude from the lower surface of the battery cell stack (120).

## Patentansprüche

1. Batteriemodul (100) aufweisend:
einen Batteriezellenstapel (120), in dem mehrere Batteriezellen (110) gestapelt sind;
einen Modulrahmen (200), der den Batteriezellenstapel (120) umhüllt und einen offenen Teil (200p) aufweist, der an der Unterseite ausgebildet ist; und
wobei der Batteriezellenstapel (120) in der Abwärtsrichtung durch den offenen Teil (200p) freiliegt,
**dadurch gekennzeichnet, dass** eine obere wärmeleitfähige Harzschicht (300) zwischen der oberen Oberfläche des Batteriezellenstapels (120) und dem Modulrahmen (200) angeordnet ist.

2. Batteriemodul (100) nach Anspruch 1, wobei:
die obere wärmeleitfähige Harzschicht (300) eine erste obere wärmeleitfähige Harzschicht (310) und eine zweite obere wärmeleitfähige Harzschicht (320) aufweist, die voneinander beabstandet sind.

3. Batteriemodul (100) nach Anspruch 2, wobei:
die Batteriezellen (110) Elektrodenführungen (111, 112) aufweisen, die in zueinander entgegengesetzten Richtungen vorstehen, und
die erste obere wärmeleitfähige Harzschicht (310) und die zweite obere wärmeleitfähige Harzschicht (320) entlang einer Richtung, in der die Elektrodenführungen (111, 112) von der oberen Oberfläche des Batteriezellenstapels (120) vorstehen, voneinander beabstandet sind.

4. Batteriemodul (100) nach Anspruch 1, wobei:
der Modulrahmen (200) einen Deckenteil (230) zum Abdecken der oberen Oberfläche des Batteriezellenstapels (120) und einen ersten Seitenflächenteil (210) und einen zweiten Seitenflächenteil (220) aufweist, die eine jeweilige der beiden Seitenflächen des Batteriezellenstapels (120) abdecken.

5. Batteriemodul (100) nach Anspruch 4, wobei:
der Modulrahmen (200) einen ersten Verlängerungsteil (21oE), der sich parallel zu der unteren Oberfläche des Batteriezellenstapels (120) von einem Ende des ersten Seitenflächenteils (210) erstreckt, und einen zweiten Verlängerungsteil (220E) aufweist, der sich parallel zu der unteren Oberfläche des Batteriezellenstapels (120) von einem Ende des zweiten Seitenflächenteils (220) erstreckt.

6. Batteriemodul (100) nach Anspruch 5, wobei:
der offene Teil (200p) zwischen dem ersten Verlängerungsteil (210E) und dem zweiten Verlängerungsteil (220E) ausgebildet ist.

7. Batteriemodul (100) nach Anspruch 5, wobei:
der Deckenteil (230), der erste Seitenflächenteil (210) und der zweite Seitenflächenteil (220) und der erste Verlängerungsteil (210E) und der zweite Verlängerungsteil (220E) einstückig ausgebildet sind.

8. Batteriepack (1000) aufweisend:
das Batteriemodul (100) nach Anspruch 1;
einen Packrahmen (1100) zum Aufnehmen des Batteriemoduls (100); und
eine untere wärmeleitfähige Harzschicht (400), die zwischen dem Batteriemodul (100) und dem Bodenteil (1110) des Packrahmens (1100) angeordnet ist.

9. Batteriepack (1000) nach Anspruch 8, wobei:
der Batteriezellenstapel (120) durch den offenen Teil (200p) mit der unteren wärmeleitfähigen Harzschicht (400) in Kontakt steht.

10. Batteriepack (1000) nach Anspruch 8, wobei:
die untere wärmeleitfähige Harzschicht (400) eine erste untere wärmeleitfähige Harzschicht (410) und eine zweite untere wärmeleitfähige Harzschicht (420) aufweist, die voneinander beabstandet sind.

11. Batteriepack (1000) nach Anspruch 10, wobei:
die Batteriezellen (110) Elektrodenführungen (111, 112) aufweisen, die in zueinander entgegengesetzten Richtungen vorstehen, und
die erste untere wärmeleitfähige Harzschicht (410) und die zweite untere wärmeleitfähige Harzschicht (420) entlang einer Richtung, in der die Elektrodenführungen (111, 112) von der unteren Oberfläche des Batteriezellenstapels (120) vorstehen, voneinander beabstandet sind.

## Revendications

1. Module de batterie (100) comprenant :
un empilement de cellules de batterie (120) dans lequel une pluralité de cellules de batterie (110) sont empilées ;
un châssis de module (200) enveloppant l'empilement de cellules de batterie (120) et comportant une partie ouverte (200p) formée sur le côté inférieur ; et
l'empilement de cellules de batterie (120) étant exposé vers le bas à travers la partie ouverte (200p),
**caractérisé en ce qu'**une couche supérieure de résine conductrice thermique (300) est située entre la surface supérieure de l'empilement de cellules de batterie (120) et le châssis du module (200).

2. Module de batterie (100) selon la revendication 1,
la couche supérieure de résine conductrice thermique (300) comprenant une première couche supérieure de résine conductrice thermique (310) et une deuxième couche supérieure de résine conductrice thermique (320) espacées l'une de l'autre.

3. Module de batterie (100) selon la revendication 2,
les cellules de batterie (110) comprenant des fils d'électrode (111, 112) faisant saillie dans des directions mutuellement opposées, et
la première couche supérieure de résine conductrice thermique (310) et la deuxième couche supérieure de résine conductrice thermique (320) étant éloignées l'une de l'autre le long d'une direction dans laquelle les fils d'électrode (111, 112) font saillie de la surface supérieure de l'empilement de cellules de batterie (120).

4. Module de batterie (100) selon la revendication 1,
le châssis de module (200) comprenant une partie de plafond (230) pour couvrir la surface supérieure de l'empilement de cellules de batterie (120), et des première et deuxième parties de surface latérale (210, 220) couvrant chacune les deux surfaces latérales de l'empilement de cellules de batterie (120).

5. Module de batterie (100) selon la revendication 4,
le châssis de module (200) comprenant une première partie d'extension (210E) s'étendant parallèlement à la surface inférieure de l'empilement de cellules de batterie (120) depuis un bout de la première partie de surface latérale (210), et une deuxième partie d'extension (220E) s'étendant parallèlement à la surface inférieure de l'empilement de cellules de batterie (120) depuis un bout de la deuxième partie de surface latérale (220).

6. Module de batterie (100) selon la revendication 5,
la partie ouverte (200p) étant formée entre la première partie d'extension (210E) et la deuxième partie d'extension (220E).

7. Module de batterie (100) selon la revendication 5,
la partie du plafond (230), les première et deuxième parties de surface latérale (210, 220), et les première et deuxième parties d'extension (210E, 220E) étant formées d'un seul tenant.

8. Bloc-batterie (1000), comprenant :
le module de batterie (100) énoncé dans la revendication 1 ;
un châssis de bloc (1100) pour recevoir le module de batterie (100) ; et
une couche inférieure de résine conductrice thermique (400) située entre le module de batterie (100) et la partie inférieure (1110) du châssis du bloc (1100).

9. Bloc-batterie (1000) selon la revendication 8,
l'empilement de cellules de batterie (120) se trouvant au contact de la couche inférieure de résine conductrice thermique (400) à travers la partie ouverte (200p).

10. Bloc-batterie (1000) selon la revendication 8,
la couche supérieure de résine conductrice thermique (400) comprenant une première couche supérieure de résine conductrice thermique (410) et une deuxième couche supérieure de résine conductrice thermique (420) espacées l'une de l'autre.

11. Bloc-batterie (1000) selon la revendication 10,
les cellules de batterie (110) comprenant des fils d'électrode (111, 112) faisant saillie dans des directions mutuellement opposées, et
la première couche supérieure de résine conductrice thermique (410) et la deuxième couche supérieure de résine conductrice thermique (420) étant éloignées l'une de l'autre le long d'une direction dans laquelle les fils d'électrode (111, 112) font saillie de la surface inférieure de l'empilement de cellules de batterie (120).
